# EUROPEAN PATENT SPECIFICATION

(11) **EP 2 052 952 B1**
(45) Date of publication and mention of the grant of the patent: **22.12.2010**
(21) Application number: 08161150.1
(22) Date of filing: 25.07.2008
(51) Int. Cl.: B62D 33/067

(54) **A device for activating a tilting of a driver's cabin of a lorry**
Vorrichtung zum Steuern des Kippens eines Fahrerhauses eines Lastkraftwagens
Dispositif de commande du basculement d'une cabine de conducteur dans un camion

(30) Priority: 25.10.2007 IT RE20070114
(43) Date of publication of application: 29.04.2009
(73) Proprietor: Ognibene S.p.A., 42100 Mancasale di Reggio Emilia (IT)
(72) Inventor: Ognibene, Claudio OGNIBENE S.P.A., 42100 ManMancasale di Reggio Emilia (IT)
(74) Representative: Corradini, Corrado

(56) References cited:
- EP-A- 0 087 213
- GB-A- 1 368 936
- JP-A- 57 198 175
- US-A- 2 306 348

## Description

The invention relates to a device for activating a tiling of a driver's cabin of a lorry, such as defined in the preamble of claim 1 and known for example from JP 5719875.

As is known, drivers' cabins are connected to the frame of the vehicle such that they enable the cabin to be tilted from a normal driving position, in which the vehicle can be driven, to a tilted position in which the engine below the cabin is exposed, for example in order to carry out maintenance or repair work on the engine.

The tilting of lorry cabins is at present done using a double-acting hydraulic cylinder, generally activated by a manual pump, which on being extended pushes the cabin, causing it to rotate about pivots or hinges in order to be raised with respect to the normal position, giving access to the engine compartment.

During tilting, as in the return to the normal position, the centre of gravity of the cabin is displaced from one side to the other of the vertical hinging plane so that during the first stage of tilting the hydraulic piston pushes the cabin, while once the vertical hinging plane is passed over, it is pulled by the weight of the cabin itself.

The double action of the piston is due to the fact that both chambers of the piston are connected to a two-way valve which sets them in communication with the supply of pressurised oil and with the discharge.

For reasons of clarity we will herein term the chamber located on the piston side the pushing chamber, which during extension of the piston is connected to the pressurised oil supply, while the chamber located on the other side of the piston we shall call the pulling chamber.

In particular, known systems include a block valve along the hydraulic circuit branch which opens from the pushing chamber, which will hereinafter be termed the pushing branch, which block valve is subject to the pressure in the pulling chamber in counter-position to the pressure of the activating oil.

Systems of this type however exhibit problems due to the fact that in order to make the cabin rotate sufficiently to bring it into the tilted position, a very long cylinder has to be provided, which is unwieldy even in the retracted position; the run of the arm of the piston also has to be longer than would be desirable.

The prior art deems it impossible to use a telescopic cylinder with a double-element, associated to a hydraulic circuit of traditional type such as the one described herein above; this would be a solution to the problem of size, but would not allow control of the second element when the centre of gravity of the cabin passes beyond the vertical hinging plane during the return of the cabin to the driving position.

In double-element pistons the internal element of a telescopic cylinder is a single-acting cylinder, which is not perfectly controllable during the re-entry stage.

This is due to the fact that when the centre of gravity of the cabin, during return i.e. in the passage from the tilted position to the normal driving position, exceeds the vertical of the hinges which constrain the cabin to the vehicle, the weight of the cabin bears down on the pushing chamber of the telescopic cylinder and in particular on the more internal of the elements.

In this case, the weight of the cabin bearing down on the pushing chamber would tend to cause the more external element to exit and to pressurise the branch of the hydraulic circuit depending on the pulling chamber, which would pilot the block valve on the branch of the hydraulic circuit depending on the pushing chamber, opening it and keeping the pushing chamber empty and thus causing an uncontrolled descent of the whole internal element. When the more internal element has retracted, the external one would start descending, but as soon as this happened the branch of the hydraulic circuit depending on the pulling chamber would depressurise because the pulling chamber would enter into a depression and would activate the block valve to close, as happens in traditional tilting circuits with a single-element cylinder.

It is therefore not possible to use a telescopic cylinder having two elements together with the traditional hydraulic circuits for this application, without running grave safety risks and without risking damage to the involved mechanical parts, due to the impossibility of controlling in particular the movement of the more internal element of the telescopic cylinder after the centre of gravity of the cabin, during the closing stage, has gone past the vertical of the hinges which constrain it to the frame; with this system there would be a dangerous uncontrolled fall of the driver's cabin.

Document JP 57 198175 shows a device for activating a tilting of a driver's cabin of a lorry. The device comprises a hydraulic circuit suitable for alternatively feeding oil in pressure to a cylinder to a push chamber or to a pull chamber. The device is provided with a couple of block valves, one for the pull branch and the other for the push branch of the hydraulic circuit in order to prevent a sudden drop of the cabin. A further valve is provided that is able to put the push chamber in fluidic communication with the pull chamber in order to absorb vibrations of the cabin during normal operation of the lorry. The device of JP 57 198175 comprises a double-acting cylinder having single piston element.

Document US 2 306 348 shows a device for activating a tilting of a driver's cabin of a lorry having a telescopic cylinder. Oil in pressure is fed to an internal conduit and subsequently to an internal piston element and then to an external element in order to rise the cabin into a tilted position. In order to bring the cabin back into a driving position for the lorry, a four-way valve is acted upon in such a way that the oil in pressure enters into the telescopic cylinder through a system of tubes forcing the return of cylinder downwards up to the point in which the centre of gravity of cabin passes the vertical centre of the hinges. The cabin then proceeds downwards by its own weight until it reaches the lowered position.

The aim of the present invention is to resolve the above-mentioned problems by realising a device which enables an optimisation of the dimensions of the tilting system of the driver's cabin of a lorry and which is safe and controllable to use. A further aim of the invention is to create a device for tilting the cabin of a lorry which is very reliable.

A further aim of the invention is to attain the mentioned objectives with a simple, rational and relatively inexpensive solution.

The aims are attained with a device for activating a tilting of a driver's cabin of a lorry, comprising the features defined in claim 1.

In an embodiment of the invention the means for commanding the pushing or pulling movement of the telescopic cylinder comprise a mechanical pump associated to a distributor valve.

In a further embodiment, the means for commanding the pushing or pulling movement of the telescopic cylinder comprise an electric pump.

In the invention the means for controlling the position of at least one of the elements comprise a pulling branch block valve, which is able to prevent the external element of the telescopic cylinder from being pushed upwards by the pressure which is generated in the pushing chamber, due to the weight of the cabin during the descent of the internal element, since during the cabin return when the weight of the cabin bears down on the internal element, the block valve closes, isolating the pulling chamber.

Further, the means for controlling the position of the elements of the telescopic cylinder comprise a pulling branch discharge valve which can halt the descent of the internal element of the telescopic cylinder by effect of the weight of the cabin, since it can act on the piloting of the block valve of the pushing chamber and close it.

The invention enables control of the stage of re-entry of the internal element, such that by interrupting pumping in any position of the cylinder elements the elements stay still.

Further embodiments of the invention include use of a shuttle valve for placing the pushing and pulling chambers in communication when the pushing branch is pressurised, in order to enable the tilting device to function regeneratively. Further, in a further embodiment of the invention which can be associated to the shuttle valve, the circuit also includes the closing of the bottom of the external element, such that the internal element is commanded by the pulling pressure, instead of the pushing pressure. In this realisation, the shuttle valve can be combined or not with a lost motion valve, which latter is connected to a lost motion conduit with the aim of enabling a free descent of the cylinder in the final stage of the cabin return, i.e. during the stage of hooking-up and in order to make the cylinder neutral while the lorry is being driven.

Further characteristics and advantages of the invention will emerge from a reading of the following description, provided by way of non-limiting example with the aid of the figures illustrated in the accompanying tables of the drawings, in which:
figure 1 represents a diagram of a first hydraulic circuit designed to activate a telescopic cylinder for tilting a lorry cabin according to the invention;
figures 2 to 4 are diagrams of the first hydraulic circuit of figure 1, in some operating configurations;
figure 5 is a diagram of a second embodiment of the hydraulic circuit of the invention;
figure 6 is a diagram of a third embodiment of the hydraulic circuit of the invention;
figure 7 is a diagram of a fourth embodiment of the hydraulic circuit of the invention;
figures 8 to 10 are diagrams of a fifth embodiment of the hydraulic circuit of the invention, during the stages of tilting the driver's cabin; and figures 11 to 14 are diagrams of the embodiment of the hydraulic circuit of figures 8 to 10, during the stages of tilting the driver's cabin.

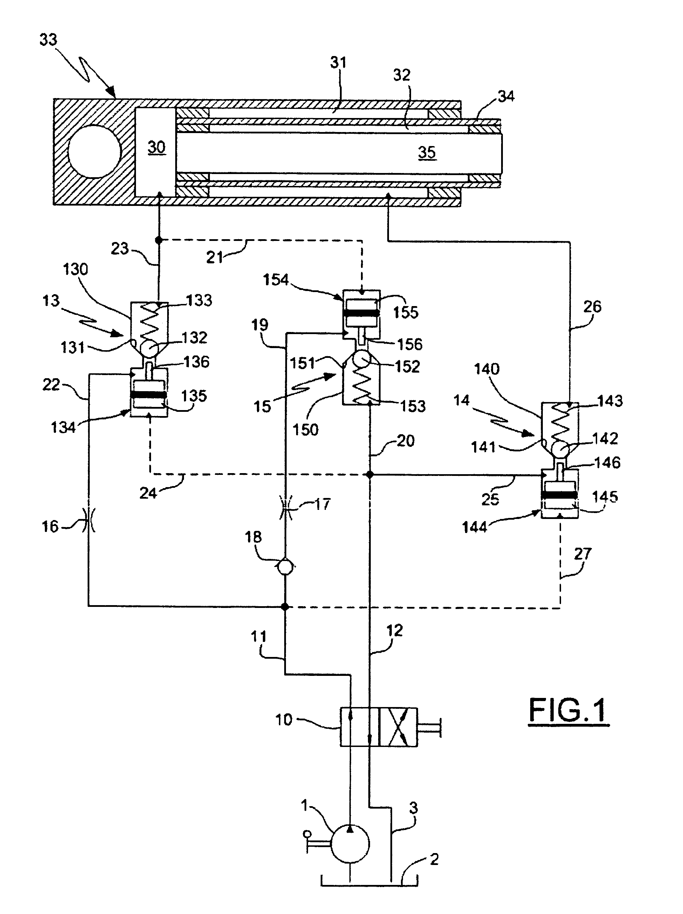

With initial reference to figures 1-4, the following is observed.

The device for tilting the cabin of a lorry of the invention comprises a hydraulic cylinder 33, which activates the tilting of the cabin.

The cylinder 33 is located between the cabin of the vehicle and the frame thereof, and is hinged to the frame, while the opposite telescopic end is hinged to the cabin and the cabin is also hinged to the frame of the vehicle in order to pass from a normal driving position to a tilted position and vice versa under the effect of the cylinder.

The hydraulic cylinder 33 is a telescopic cylinder having two elements, an internal element 35 and an external element 34, both commanded by a hydraulic circuit which comprises a plurality of valves and on which a pump 1 sourcing from a tank 2 acts.

In particular, the internal element 35 is a single-acting piston, associated to a non-commanded chamber 32, which can be placed in communication with the pushing chamber 30, through a passage of the piston or element (not represented). The external element 34 is a double-acting piston, provided with a pushing chamber 30 and a pulling chamber 31.

The hydraulic circuit to which the telescopic cylinder 33 is connected comprises a branch which leads from the pushing chamber, which will hereinafter be termed the pushing branch 11, and a branch which leads from the pulling chamber, hereinafter the pulling branch 12, where a first blocking valve 13 is located on the pushing branch 11 for the pushing chamber 30, and a block valve 14 for the pulling chamber 33 and a load discharge valve 15 for the piloting branch 24 are located on the pulling branch 12.

The hydraulic circuit further comprises a four-way two-position distributor valve 10 which commands the pushing or pulling movement of the telescopic cylinder. The distributor valve 10 is connected to a pump 1, either manual or electric, which has the function of supplying the oil, sourcing it from an underlying container 2, which the discharge conduit 3 deriving from the distributor valve 10 is also connected to.

In the illustrated embodiments of the figures the valves 13, 14 and 15 are constructionally similar, and each thereof comprises a body, respectively denoted by the numerical references 130, 140 and 150, which exhibits a valve seating, respectively 131, 141 and 151, on which a ball obturator acts, respectively 132, 142 and 152, which is normally kept in the closed position, i.e. against the valve seating thanks to a spring, denoted respectively by 133, 143 and 153. An actuator 134, 144, 154 acts on the ball obturator 132, 142, 152 through the valve seating and in contrast with the spring action, which actuator 134, 144, 154 comprises a piston 135, 145, 155 from which a stem 136, 146, 156 derives, a free end of which acts on the ball obturator. The piloting of the actuator is commanded by the pressure of the oil in the hydraulic circuit, as will be explained in detail herein below.

The first block valve 13 is located on the pushing branch 11 and is connected to the circuit by an entry conduit 22 and an exit conduit 23 and via the exit conduit 23 it is connected to the pushing chamber 30. The valve 13 is also pilotable by the actuator 134 the activation of which is commanded through a piloting branch 24 located branching off from the pulling branch 12.

The load valve 15 of the piloting branch 24 (and also the pulling branch 12) is connected to the hydraulic circuit by an entry conduit 19 and by an exit conduit 20 which opens into the pulling branch 12. The valve 15 is also pilotable by means of the actuator 154 the activating of which is commanded by a piloting branch 21, which is hydraulically connected to the pushing chamber 30.

Finally, the block valve 14 is located on the pulling branch and is connected to the circuit by an entry conduit 25 and an exit conduit 26 which opens in the pulling chamber 31. The valve 14 is also pilotable via the actuator 144, the activating of which is commanded by means of a piloting branch 27, the piloting branch 27 being branched off from the pushing branch 11.

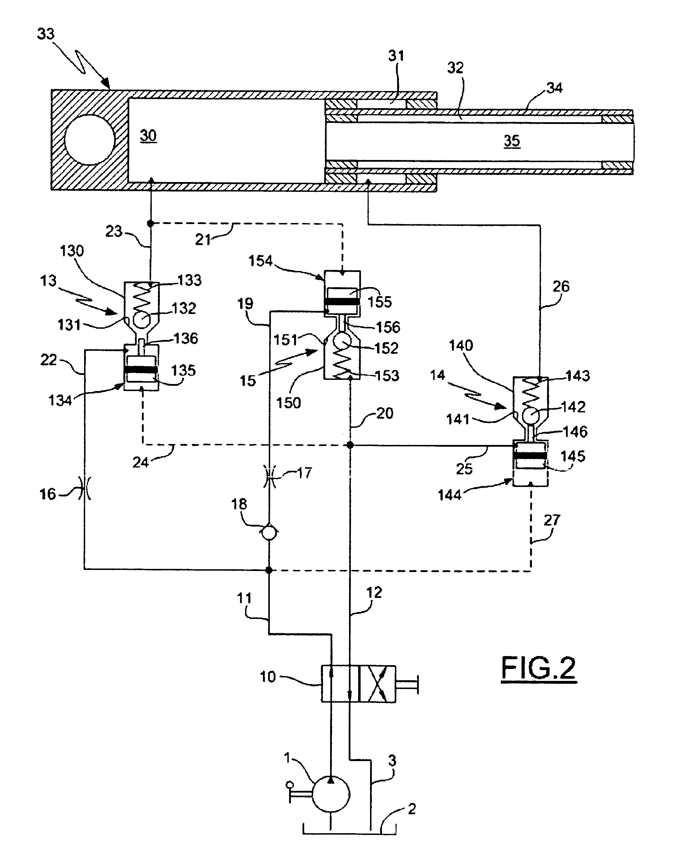

In figure 2 the distributor valve 10 is shown in a position in which, following the activating of the pump 1, the oil in the hydraulic circuit pressurises the pushing branch 11 in the circuit and via the entry conduit 22 opens the valve 13, pressurising the pushing chamber 30 and thus activating the cylinder to bring the cabin from a driving position to a tilted position.

The conduit 19 exhibits a check valve 18 which keeps the pushing branch and the pulling branch 12 separate during the raising of the cabin.

Finally, the conduit 22 and the conduit 19 respectively exhibit chokes 16 and 17 the function of which will be illustrated more fully herein below.

The functioning of the circuit of figures 1-4 of the invention is as follows.

Figure 2 illustrates the behaviour of the valves 13-15 during the stages in which, following the activation of the pump 1, the driver's cabin is brought from a normal driving position to a tilted position.

By activating the pump 1, the oil in the hydraulic circuit pressurises the pushing branch 11 of the hydraulic circuit, while by effect of the check valve 18, the conduit 19 is not crossed by oil. In this condition the valve 15 is open (figure 2) inasmuch as the pressurised oil, via the conduit 21, activates the actuator 154 which opens the valve 15, but there is no passage of oil through the valve 15 because the conduit 19 is not crossed by oil.

The pressurised oil, through the entry conduit 22, opens the valve 13, pressurising the pushing chamber 30 and thus enabling activation of the telescopic cylinder in extension in order to raise the driver's cabin.

The pressure of the oil in delivery also acts on the branch-off of the piloting branch 27 of the block valve 14, opening it so that the oil contained in the pulling chamber 31 flows out through the block valve 14 of the pulling chamber 31 and then discharges into the container 2 via the pulling branch 12. During the tilting of the cabin, when the centre of gravity of the cabin passes over the vertical hinging plane, the weight of the cabin draws the piston elements creating a depression in the pushing chamber 30. This depression causes the closing of the valve 15 inasmuch as the oil in the branch 21 is recalled into the pushing chamber 30 and the force of the spring 153 pushes the ball obturator 152 against the respective valve seating 151.

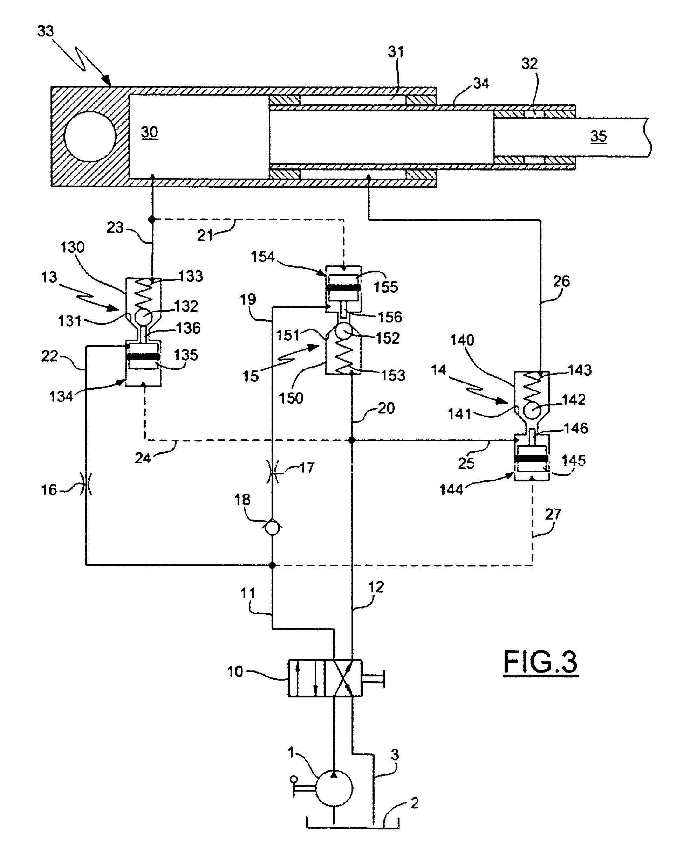

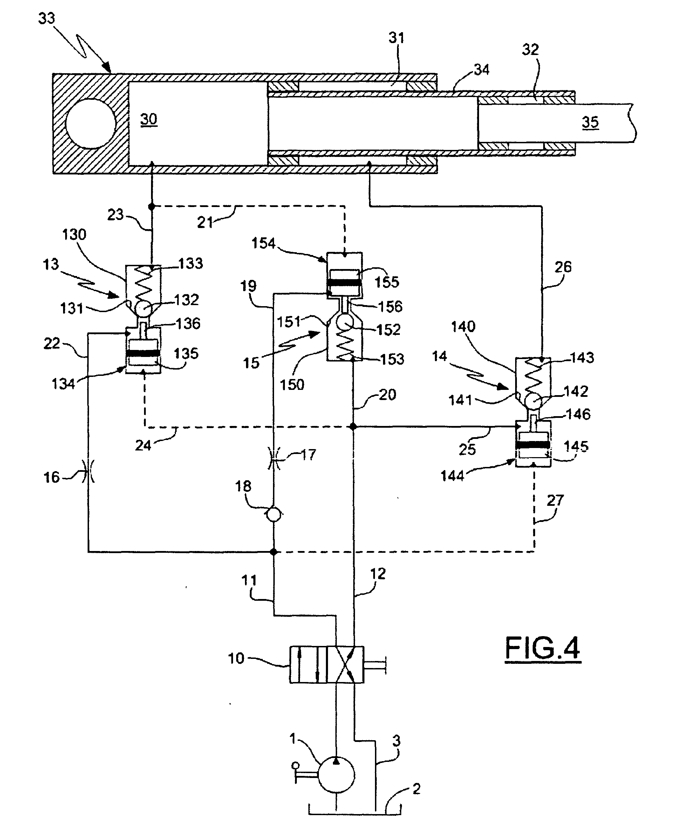

To return the cabin from the tilted position to the driving position, firstly the distributor valve 10 is activated to bring it into the position illustrated in figures 3 and 4.

In this position, the oil in the hydraulic circuit pressurises the pulling branch 12, and consequently the oil pressure, through the entry conduit 25, opens the block valve 14 of the pulling chamber 31, such that the oil puts the pulling chamber 31 under pressure, enabling the telescopic cylinder to start moving in order to bring the cabin into the driving position.

At the same time the oil pressure acts on the piloting branch 24 of the block valve 13 of the pushing chamber 30, keeping it open and enabling the oil to exit from the pushing chamber 30.

When the centre of gravity of the cabin has passed the vertical with respect to the hinging points thereof on the frame, the weight of the cabin begins to bear down, pushing the internal piston element 35 downwards and in a closing direction. If this where actuall to happen, the external element 34 would be pushed upwards by the pressure generated in the pushing chamber 30 due to the weight of the cabin.

However, as soon as this happens the pressure in the pulling chamber 31 increases, closing the block valve 14 which thus isolates the pulling chamber 31, stopping the outwards push of the external element 34.

At this point, by interrupting the action of the pump 1, i.e. stopping pumping, the overpressure which forms in the pushing chamber 30 (also obtained thanks to choke 16, which prevents the direct unloading or too-rapid unloading) is sufficient to overcome the pressure in the pulling branch, and the discharge valve 15 opens and sets the pulling branch 12 in discharge, as illustrated in figure 4.

The valve 13, having the pilot 24 discharged through the conduit 20, the conduit 19 and the pushing branch 11, closes and blocks the pushing chamber 30 and the internal element 35 of the cylinder stops the descent.

When the pump 1 is newly activated, a part of the oil discharges through the conduit 19 (as the valve 15 is still piloted). However the presence on the conduit 19 of the choke 17 enables formation in the pulling branch 12 of a pressure which is sufficient to pilot, through the branch 24, the actuator 134 which commands the valve 13 to open, which opening places the pushing chamber 30 in discharge.

Further, and again by effect of the choke 17, a pressure difference is created in the branch 20 which is sufficient to cause a translation of the actuator 154 favoured by the fact that the conduit 21 is in discharge via the valve 13. Consequently the valve 15 closes and the pumping flow is entirely directed into the pulling chamber 31, causing the cabin to descend.

With the invention, it is therefore possible to cause the cabin to descend in a controlled way, simply by interrupting and restarting the pumping.

By interrupting the pumping the telescopic cylinder and the elements thereof stay still in any operating condition of the device.

In a variant of the invention, the chokes 16 and 17 can be united to make a single choke located on the branch 11.

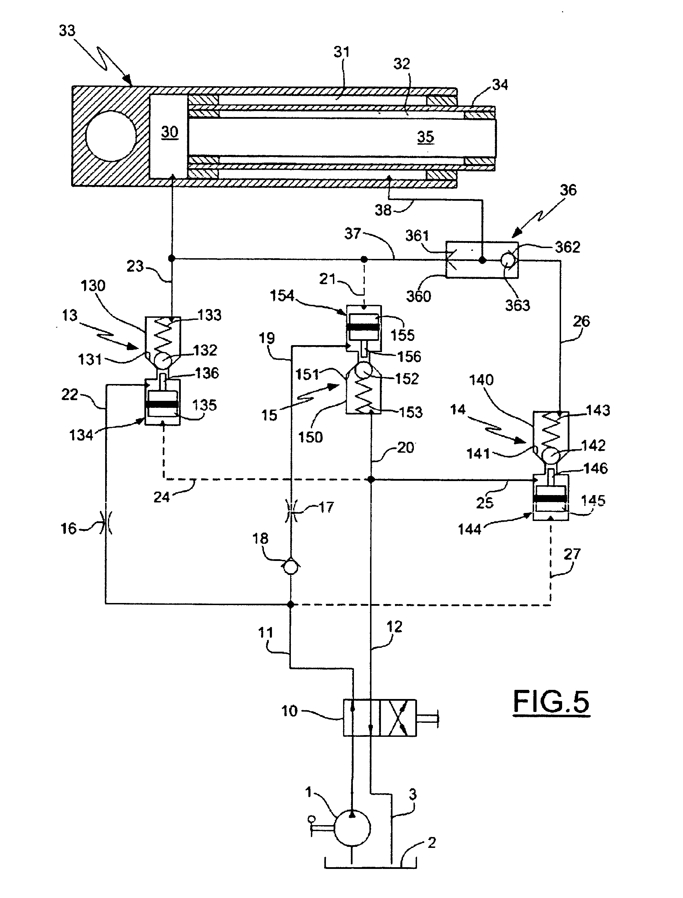

A similar circuit to the preceding one, which however works regeneratively, is illustrated in figure 5, in which the components which correspond to those illustrated in figures 1 to 4 are denoted using the same numerical references. The difference in comparison with the circuit of figures 1-4 is the addition of a shuttle valve 36. The shuttle valve 36 comprises a valve body 360 provided with two valve seatings 361 and 362 to which respective oil-supplying conduits 37 and 26 are connected. An oil discharge conduit 38 is present between the two valve seatings, as is a mobile obturator 363 which displaces alternatingly between the two seatings.

During the stage in which the lorry's driving cabin is brought from a driving position to a tilted position, i.e. pressurising the pushing branch, the pushing chamber 30 and the pulling chamber 31 are placed in communication by the shuttle valve 36, which is in the position shown in figure 5, for which the system is in regenerative mode.

During the return stage of the cabin into the driving position, i.e. pressurising the pulling branch, the shuttle valve 36 switches, separating the two chambers and making the system function as in the previous case described with reference to figures 3-4.

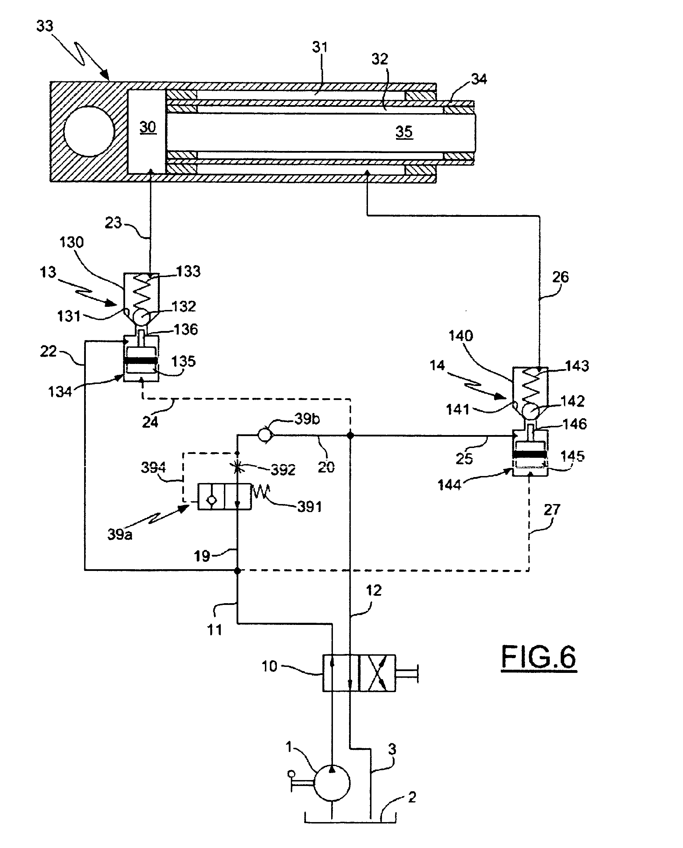

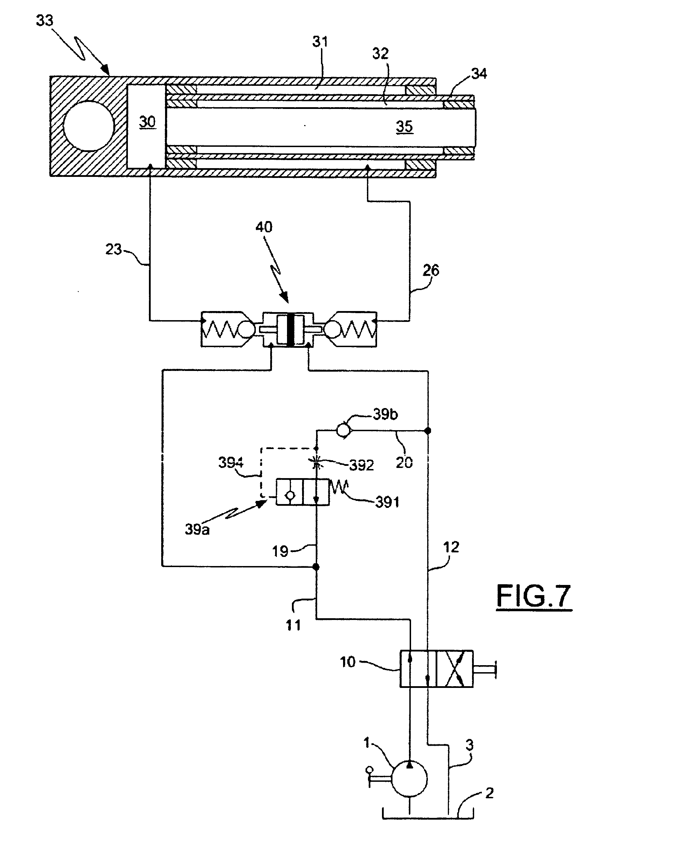

Figures 6 and 7 illustrate further embodiments of the hydraulic circuit of the invention, where the components corresponding to those in figures 1-4 are denoted using the same numbers.

In a variant of the invention, the discharge valve of the pulling branch can be realised in two divided parts and associated to a variable-flow choke 40, as illustrated in figure 6; i.e. a normal check valve 39b and a flow block valve 39a. The check valve 39b serves to isolate the two branches, pushing and pulling, during the tilting stage, i.e. when the pulling branch 11 is pressurised.

The valve 39a serves to place the branch 12 in discharge, and thus remove piloting pressure to the valve 13. The default position is open due to the force of a spring 391, as represented in figure 6.

By providing flow on the pushing branch, thus causing the cabin to return, the flow rate is discharged through the valve 39a.

However, by specially regulating the spring 391 load and the variable choke 392, by providing a certain flow rate, i.e. the flow rate which is normally obtained by a manual pumping, a sufficient pressure difference is created in the branch 394 which enables the valve 39a to be closed such that the rest of the pumped fluid is sent into the chamber 31.

When pumping has finished, the valve 14 closes, the branch 12 is depressurised, the valve 39a returns into the default position, thanks to the action of the spring 391, putting the branch 12 into discharge and removing the piloting to the valve 13.

To enable depressurisation of the branch 12, the seal of the valve 39a (in the switched configuration) must not be perfect, nor lose too much, in order not to have a too-low performance of the pumped fluid.

The valve 39a can be a ball located in a conduit, precise and with two seal seatings.

By sending flow from the pulling branch, the ball goes to seal on the seating of the branch 20, so that the two branches are perfectly isolated, having the function of a check on valve 39b.

When the flow is sent to the pushing branch in order to supply the chamber 30 and thus return from the tilted position, a minimum flow must be supplied, enough to close the valve 39a, switching the ball onto the seating of branch 19. If a small flow is supplied, it passes around the ball without creating particularly high pressure drops, so that the spring is enough to maintain the ball in a floating position. If the pumping creates a certain flow, a pressure drop is created which is sufficient to overcome the force of the spring and the ball goes to seal against the seating on the branch 19. As mentioned herein above, there is no need for a perfect seal in order for the branch to be depressurised.

It is also possible to use a platelet instead of a ball, as it is easier to recreate a controlled loss of the coupling of two flat surfaces. Further, the plate can allow a greater fall of pressure when pumping begins more rapidly, thus improving the pumping performance.

In a variant of the invention, not illustrated, the check valve 39b can be integrated with a flow block valve 39a in a single valve.

Further, by integrating the shuttle valve 36, described with reference to the circuit of figure 5 (in this case not illustrated) the system of figure 6 can be made to function in regenerative mode.

Figure 7 shows a similar solution to that of the circuit of figure 6, in which the two block valves 13 and 14 are integrated in a single valve 40.

From the functional point of view the functioning is the same as that of the preceding realisations, apart from the fact that in this case it is not possible to function regeneratively by adding the shuttle valve 36.

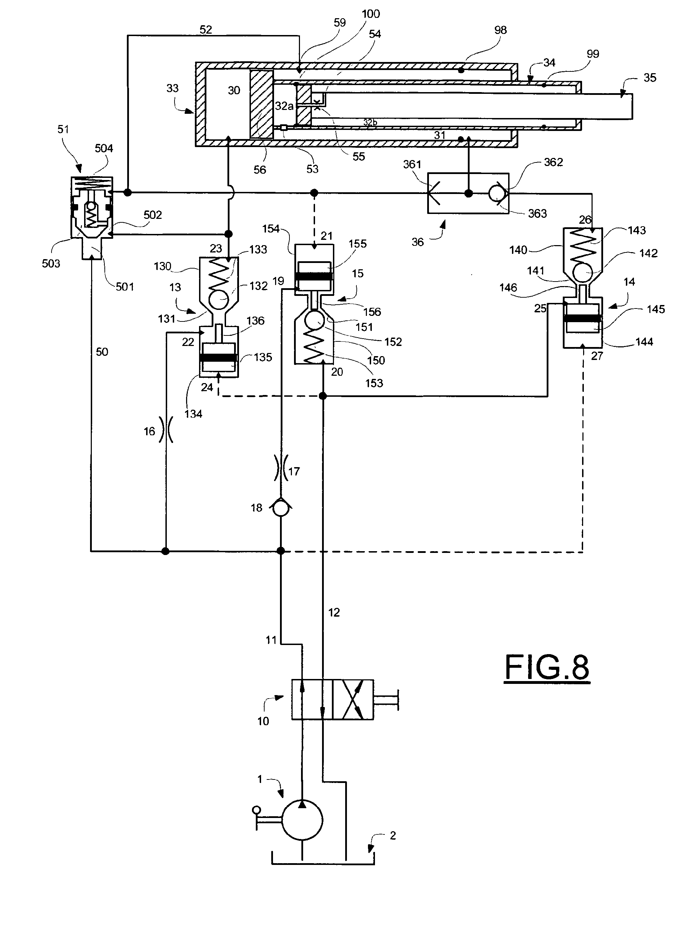

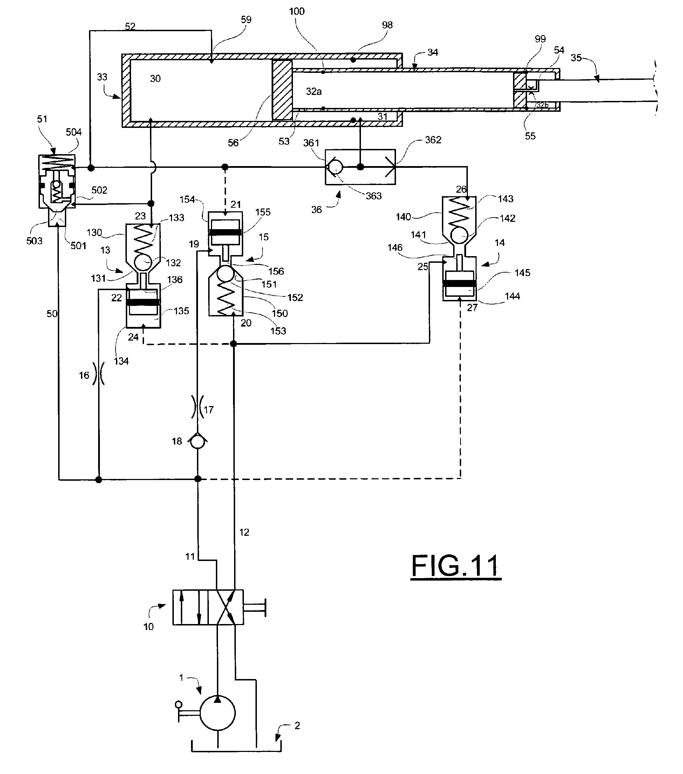

A fifth embodiment of the hydraulic circuit of the invention is now described with reference to figures 8-10 for the stages of tilting the driver's cabin and figures 11-14 for the return stage of the cabin.

This fifth embodiment of the invention is an evolution of the realisation illustrated in figure 5; in this, apart from the shuttle valve 36 interposed between the pushing branch and the pulling branch of the circuit, there is also a branching 50 of the pushing branch which comprises a lost motion valve 51 from which a lost motion conduit 52 departs, terminating in a lost-motion hole 59.

A further difference with respect to the embodiments of figures 1-7 is the fact that the bottom 56 of the external element is closed and a passage hole 53 has been made through the element, such that the internal element is commanded by the pulling pressure instead of by the pushing pressure, as the chamber 32a is thus located in communication with the chamber 31.

The function of the lost motion valve is known and is that of enabling a free descent of the cylinder in the final stage of return of the cabin, i.e. the hooking stage to the frame, and rendering the cylinder free when the vehicle is moving. The lost motion valve 51 comprises a first and a second chamber 501, 502, an obturator 503 and a spring 504.

Further, internally of the internal element 35 there is a passage 54 provided with a choke 55 which connects a chamber 32b with the chamber 32a, which respectively function as a pulling chamber and a pushing chamber for the internal element 35.

The functioning of the fifth embodiment can be illustrated by making reference to the following stages.

As for the tilting of the cabin, a first stage (figure 8) includes sending the oil through the pump 1 and the distributor valve 10 through the thrust branch 11 towards the pushing chamber 30. During this stage, as long as the piston does not exit from the free fall area, the circuit will not function regeneratively, but the oil can fill only the pushing chamber 30 which is isolated from the other chambers of the circuit: thus the pushing occurs over the whole pushing area. In this stage the hydraulic seal is still given by the pump 1; as the lost motion valve 51 remains open for the whole stage. This means that the position of the distributor valve 10 inverts and the cabin descends.

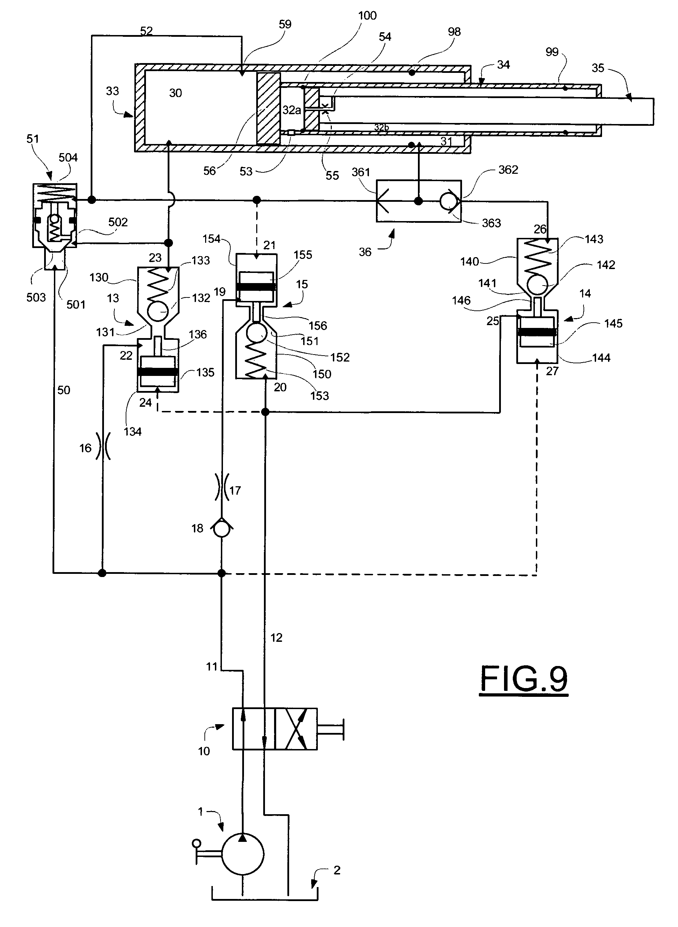

In the second stage (figure 9), once the piston has exited from the free fall area, the oil sent to the chamber 30 can pass through the lost motion conduit 52 and the shuttle valve 36 and can fill the chambers 31, 32a, 32b which are thus brought to the same pressure as the push chamber 30; in this case the circuit functions regeneratively and the external element 34 rises due to the thrust due to the area of the external element 34.

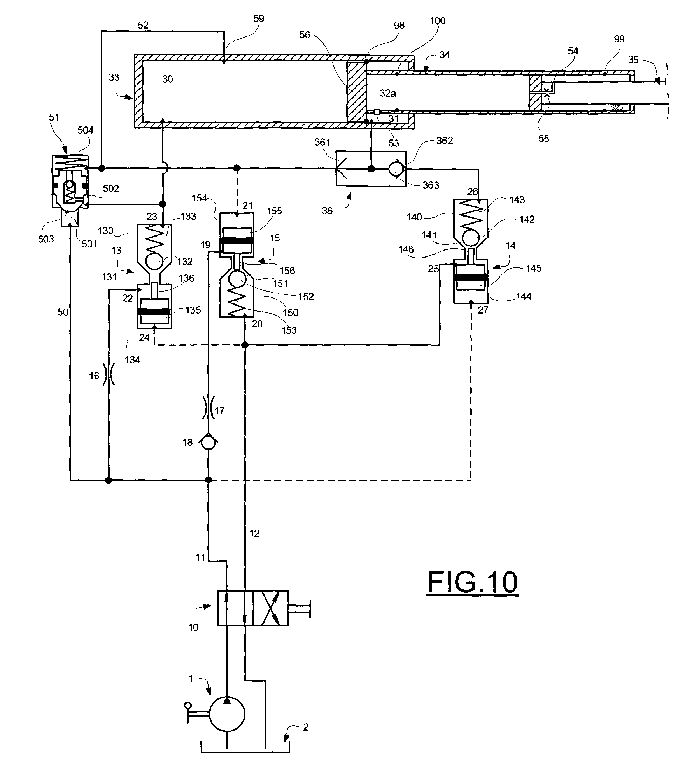

The third stage (figure10) includes the exit of the internal element 35. Once the external element 34 has exited up to the end run 98, the pressure increases and from the more internal element 35 starts to exit, under the thrust of the stem area. In this stage, the centre of gravity of the cabin is almost on the vertical of the tilting centre, so that even if a push is made on a much smaller area with respect to the initial area of the first stage, the pressure requested is however low and consequently the operator's exertion is fully acceptable.

The fourth stage includes the braked forwards fall of the driver's cabin, up till when the internal element 35 reaches the end run 99 thereof.

When the centre of gravity of the cabin passes through the vertical of the tilting hinge, the weight of the cabin begins to pull the cylinder. The opening of the cylinder is slowed by the oil which exits the chamber 32b through the choke 55 and which fills the chamber 32a in expansion (and thus at a lower pressure). During the rising stage the position of the valve 15 is open, but this fact does not affect the functioning of the system inasmuch as the branch 12 is always discharged. The block valve 14 on the pulling branch is opened by the piloting 27 which removes pressure from the branch 26 and ensures the switching of the shuttle valve 36 for the functioning of the regenerative system.

As for the return of the cabin, the distributor valve 10 is switched as in figures 11-14 so that the pump 1 supplies the pulling branch during the first return stage (figure 11), so that the chamber 30 is depressurised, not having to balance any load and being connected in discharge by the valve 13 each time the pulling branch is pressurised. Thus by supplying flow to the pulling branch 12, the shuttle valve 36 is switched as in figure 11. The weight of the cabin tends to keep the cylinder open because the centre of gravity of the cabin is beyond the vertical of the hinge plane thereof. The valve 15, which serves to put the piloting of the block valve 13 in discharge, is always closed. In this way the pressures required to overcome the weight of the cabin can be reached in the pulling branch, causing the external element 34 to return, while the internal element 35 during this stage is substantially in the extended position.

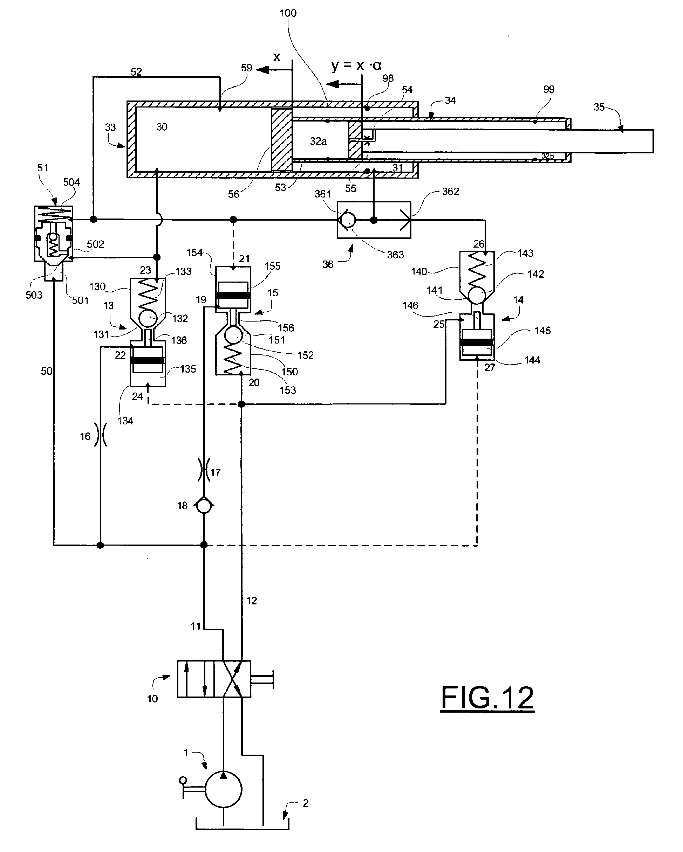

In the second stage of the cabin return (figure 12) the centre of gravity passes through the vertical of the hinge, so that the weight of the cabin now begins to close the cylinder. The shuttle valve 36 remains switched as before, as there is a pressure in the pulling chambers which is above that of the pushing chamber. During this stage the valve 15 stays open and the flow of oil, supplied by the operator pumping, all ends in discharge through the chokes of the branch 19. This crossing creates the minimum pressure required to pilot the block valve 13 on the pushing branch. The pressure on the pulling branch never reaches the pressure present in the pulling chambers, so that the valve 14 stays closed.

As during this stage the oil in the pulling chamber stays constant, for the retracting runs of the elements account has to be taken of the ratio depending on the geometry of the elements, which gives the ratio between how much the external element 34 descends and how much the internal element 35 descends; this means the cylinder can be made of such a size that the whole of the internal element 35 returns inside the external element 34 before reaching the point of free fall.

The ratio α enables the relation between the runs of the elements in this stage to be calculated, so that if the external element 34 descends by X, the internal element 35 descends by Y = X*α.

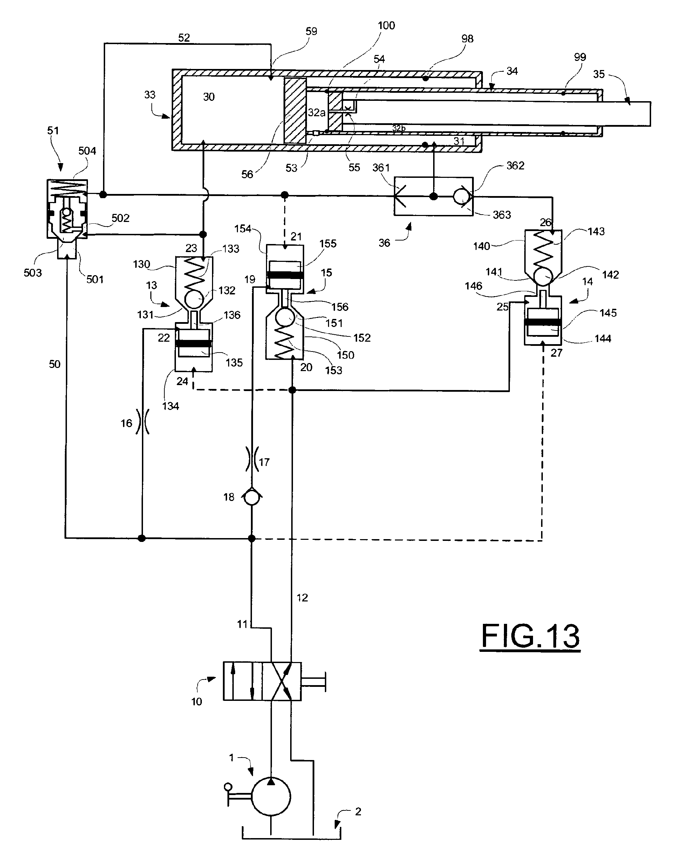

As for the third stage of the cabin return (figure 13), the more internal element reaches closing endrun 100, so that the whole system begins to function as a single-element cylinder. The pressure in the pulling chambers falls (no longer having to balance any load) up until it falls below the value of the pressure in pushing chamber, when the shuttle valve 36 ball switches (figure 13) and a regenerative functioning starts up; for each pumping, the oil in the pushing chamber goes in part into the pulling chamber (passing through the lost motion branch) and in part is discharged.

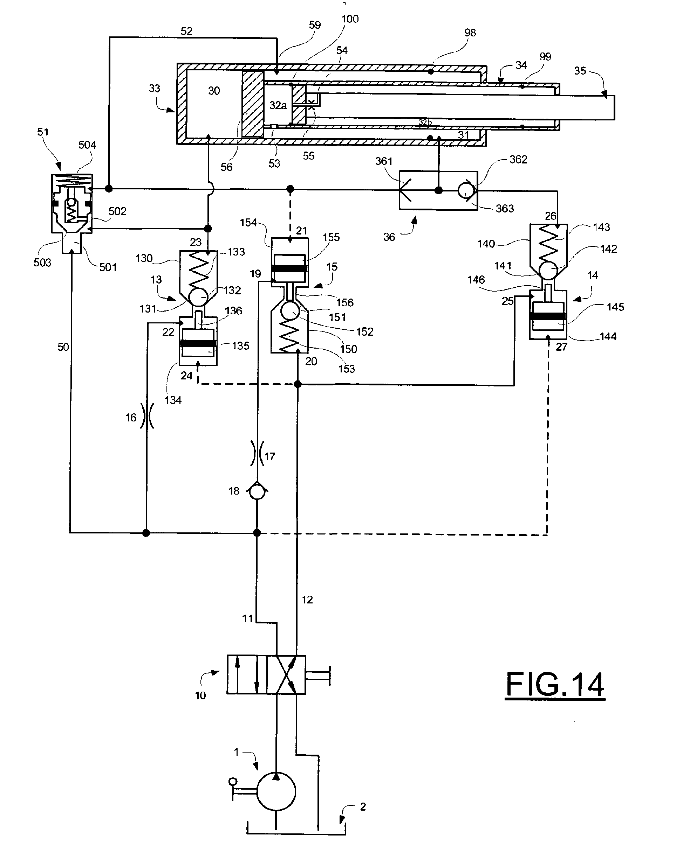

The fourth and final stage of the return of the cabin (figure 14) is the stage of free fall, in which the piston passes the lost motion hole 59, isolating the pushing and pulling chambers. In this way the oil from the pushing chamber does not return into the pulling chamber, but is all discharged: the pressure in the pulling branch falls and the lost motion valve 51, which is no longer in equilibrium, switches and opens so that it can maintain the pushing chamber 30 in discharge up till the cabin is hooked to the frame.

The above realisation illustrates how both the elements are always controlled at each stage of movement, and in particular during the cabin return stage. Obviously the invention as it is described is susceptible to modifications or improvements dictated by contingencies or details, without departing from the scope of the invention as defined in the appended claims.

## Claims

1. A device for activating a tilting of a driver's cabin of a lorry, comprising a hydraulic cylinder (33) hinged to the cabin and to a frame of the lorry and destined to activate the tilting of the cabin from a driving position to a tilted position and vice versa, the device further comprising a hydraulic activating circuit of the cylinder, having a pushing branch and a pulling branch, the hydraulic circuit comprising means for commanding a pushing movement or a pulling movement of the telescopic cylinder and being provided with at least a piloted block valve (13) associated to a pushing chamber (30) of the cylinder, **characterised in that** the hydraulic cylinder (33) is a telescopic cylinder having a cylinder housing that encloses said pushing chamber (30) and is provided with at least two moving elements (34, 35), an external element (34) and an internal (35), said internal element (35) moving inside said external element (34) and **in that** it comprises means for controlling the position of said two moving elements (34, 35) belonging to the telescopic cylinder (33), said means for controlling the position of said internal element (35) comprising valve means configured to act on the piloting of said block valve (13) of the pushing chamber (30) to close the pushing chamber (30) to counterbalance the weight of said cabin.

2. The activating device of claim 1, **characterised in that** the means for commanding the pushing or pulling movement of the telescopic cylinder comprise a mechanical pump associated to a distributor valve (10).

3. The activating device of claim 1, **characterised in that** the means for commanding the pushing and pulling movement of the telescopic cylinder comprise an electric pump.

4. The activating device of claim 1, **characterised in that** the means for controlling the position of said external element (34) comprise at least a block valve (14, 38) of the pulling branch, which is able to prevent the external element (34) of the telescopic cylinder from being pushed upwards by a pressure generated in the pushing chamber (30), due to a weight of the cabin during the descent of the internal element (35).

5. The activating device of claim 2, **characterised in that** the block valve (14) of the pulling branch is located on the pulling branch and is connected to the hydraulic circuit by an entry conduit (25) and by an exit conduit (26) which opens into the pulling chamber (31) and is pilotable by means of a piloting branch (27), the piloting branch branching off from the pushing branch (11).

6. The activating device of claim 1, **characterised in that** the means for controlling the position of said internal element(35) comprise a discharge valve (15, 37) of the pulling branch which discharge valve (15, 37) is able to interrupt the descent of the internal element (35) of the telescopic cylinder by effect of the weight of the cabin, by acting on the piloting of the block valve (13) of the pushing chamber (30) to close the pushing chamber (30).

7. The activating device of claim 4, **characterised in that** the discharge valve (15) of the pulling branch is connected to the hydraulic circuit by an entry conduit (19) and by an exit conduit (20) opening into the pushing branch (12) and is pilotable by means of a piloting branch (21) located branching off from the exit conduit of the first valve (13).

8. The activating device of claim 5, **characterised in that** the entry conduit of the discharge valve (15) of the pulling branch exhibits a check valve (18) which keeps the pushing branch and the pulling branch separate in order to prevent the pressure from reaching the discharge valve (15) of the pulling branch during activation of the pump (1) to raise the cabin.

9. The activating device of claim 5, **characterised in that** the entry conduit of the block valve (13) of the pushing chamber (30) exhibits a choke (16) which when pumping is interrupted maintains a pressure value in the pushing chamber which is sufficient to allow a piloting of the valve (15) and a discharging of the pulling branch.

10. The activating device of claim 5, **characterised in that** the entry conduit of the discharge valve (15) of the pulling branch exhibits a choke (17) which enables formation in the pulling branch (12) of a sufficient pressure to pilot the block valve (13) of the pushing chamber, opening the block valve (13) such as to place the pulling chamber (30) in discharge and creating a difference of pressure in the circuit which is sufficient to close the discharge valve (15) of the pulling branch in order to enable the pumping flow to act wholly on the pulling chamber (31).

11. The activating device of claim 1, **characterised in that** the pushing conduit of the hydraulic circuit exhibits a choke.

12. The activating device of claim 1, **characterised in that** the means for controlling a position of said internal element (35) comprise a discharge valve of the pulling branch, divided into two parts (39a, 39b) and associated to a variable-flow choke (392), the first part being constituted by a check valve (39b) for isolating the pushing branch and the pulling branch of the hydraulic circuit, and the second part being constituted by a flow block valve (39a) associated to a spring (391) for discharging the pulling branch (12) when it is necessary to prevent piloting of the block valve (13) of the pushing chamber.

13. The activating device of claim 12, **characterised in that** the loading of the spring (391) and the variable choke (392) are regulated such that during manual pumping a sufficient pressure difference is created to enable the flow block valve (39a) to be closed such that a remaining part of the pumped oil is sent into the pushing chamber (30).

14. The activating device of claim 12, **characterised in that** the flow block valve (39a) can be realised by a ball or a plate located in a conduit having two opposite sealing seatings.

15. The activating device of claim 1, **characterised in that** it includes a shuttle valve (36) for setting the pushing chamber (30) and the pulling chamber (31) in communication when the pushing branch is pressurised, in order to enable the device to function in a regenerative mode.

16. The activating device of claim 15, **characterised in that** it includes a lost motion valve (51) connected to a lost motion conduit (52) for placing the pushing chamber (30) and the pulling chamber (31) in communication when the piston has exited from a free fall area, in order to enable the device to function in a regenerative mode.

17. The activating device of claim 15, **characterised in that** it includes a passage (54) internally of the internal element (35) which passage (54) is provided with a choke (55) which connects a chamber (32b) with a further chamber (32a) functioning respectively as a pulling chamber and a pushing chamber for the internal element (35).

18. The activating device of claim 17, **characterised in that** the chamber (32a) is isolated from the pushing chamber (30) by closure of a bottom (56) of the external element, and is set in communication with the pulling chamber (31) by means of a hole (53).

19. The activating device of the preceding claims, **characterised in that** the block valve (13) of the pushing chamber (30) and the block valve (14) of the pulling chamber (31) are constructionally integrated in a single valve (40).

## Patentansprüche

1. Vorrichtung zum Steuern des Kippens eines Fahrerhauses eines Lastkraftwagens, einschließlich eines Hydraulikzylinders (33), der am Fahrerhaus und an einem Rahmen des Lastkraftwagens gelenkig befestigt ist und der das Steuern des Kippens des Fahrerhauses aus der Fahrstellung in die Kippstellung und umgekehrt bewirkt. Die Vorrichtung beinhaltet ferner eine hydraulische Ansteuerschaltung des Zylinders mit einer Schiebeschaltung und einer Ziehschaltung, wobei die hydraulische Ansteuerschaltung Mittel zum Veranlassen einer Schiebe- oder einer Ziehbewegung des Teleskopzylinders beinhaltet und mit wenigstens einem gesteuerten Sperrventil (13) ausgestattet ist, das einer Schiebekammer (30) des Zylinders zugeordnet ist, **dadurch gekennzeichnet, dass** der Hydraulikzylinder (33) ein Teleskopzylinder mit einem Zylindergehäuse ist, das die Schiebekammer (30) einschließt und mit wenigstens zwei Bewegungselementen (34, 35), einem externen Element (34) und einem internen Element (35), ausgestattet ist, wobei sich das interne Element (35) innerhalb des externen Elements (34) bewegt, und dass es Mittel zum Kontrollieren der Stellung der beiden Bewegungselemente (34, 35) des Teleskopzylinders (33) beinhaltet. Die Mittel zum Kontrollieren der Stellung des internen Elements (35) umfassen eine Ventilanordnung, die so angeordnet sind, dass sie auf die Steuerung des Sperrventils (13) der Schiebekammer (30) einwirkt, um die Schiebekammer (30) zu verschließen und damit das Gewicht des Fahrerhauses auszugleichen.

2. Die Steuervorrichtung nach Patentanspruch 1, **dadurch gekennzeichnet, dass** die Mittel zum Veranlassen der Schiebe- und Ziehbewegung des Teleskopzylinders eine mechanische Pumpe beinhalten, die einem Verteilerventil (10) zugeordnet ist.

3. Die Steuervorrichtung nach Patentanspruch 1, **dadurch gekennzeichnet, dass** die Mittel zum Veranlassen der Schiebe- und Ziehbewegung des Teleskopzylinders eine elektrische Pumpe beinhalten.

4. Die Steuervorrichtung nach Patentanspruch 1, **dadurch gekennzeichnet, dass** die Mittel zum Kontrollieren der Stellung des externen Elements (34) wenigstens ein Sperrventil (14, 38) der Ziehschaltung beinhalten, welches das externe Element (34) des Teleskopzylinders daran hindern kann, durch einen Druck nach oben geschoben zu werden, der in der Schiebekammer (30) durch das Gewicht des Fahrerhauses beim Absenken des internen Elements (35) entsteht.

5. Die Steuervorrichtung nach Patentanspruch 2, **dadurch gekennzeichnet, dass** das Sperrventil (14) der Ziehschaltung auf der Ziehschaltung angebracht ist und mit der hydraulischen Ansteuerschaltung durch eine Einlassleitung (25) und eine Auslassleitung (26) verbunden ist, die in die Ziehkammer (31) führt und sich über eine Steuerschaltung (27) steuern lässt, die von der Schiebeschaltung (11) abzweigt.

6. Die Steuervorrichtung nach Patentanspruch 1, **dadurch gekennzeichnet, dass** die Mittel zum Kontrollieren der Stellung des internen Elements (35) ein Auslassventil (15, 37) der Ziehschaltung beinhalten, welches das Absenken des internen Elements (35) des Teleskopzylinders unter der Wirkung des Gewichtes des Fahrerhauses durch Einwirkung auf die Steuerung des Sperrventils (13) der Schiebekammer (30) zum Verschließen der Schiebekammer (30) unterbrechen kann.

7. Die Steuervorrichtung nach Patentanspruch 4, **dadurch gekennzeichnet, dass** das Auslassventil (15) der Ziehschaltung mit der hydraulischen Ansteuerschaltung durch eine Einlassleitung (19) und eine Auslassleitung (20) verbunden ist, die zur Schiebeschaltung (31) führt und sich über eine Steuerschaltung (21) steuern lässt, die von der Auslassleitung des ersten Ventils (13) abzweigt.

8. Die Steuervorrichtung nach Patentanspruch 5, **dadurch gekennzeichnet, dass** die Einlassleitung des Auslassventils (15) der Ziehschaltung ein Rückschlagventil (18) aufweist, das die Schiebeschaltung und die Ziehschaltung voneinander getrennt hält, um zu verhindern, dass bei Betätigung der Pumpe (1) zum Anheben des Fahrerhauses Druck zum Auslassventil (15) der Ziehschaltung gelangt.

9. Die Steuervorrichtung nach Patentanspruch 5, **dadurch gekennzeichnet, dass** die Einlassleitung des Sperrventils (13) der Schiebekammer (30) eine Drossel (16) aufweist, die bei Unterbrechung des Pumpvorganges einen Druckwert in der Schiebekammer aufrecht erhält, der ausreicht, um das Ventil (15) steuern und die Ziehschaltung entladen zu können.

10. Die Steuervorrichtung nach Patentanspruch 5, **dadurch gekennzeichnet, dass** die Einlassleitung des Auslassventils (15) der Ziehschaltung eine Drossel (17) aufweist, welche einen ausreichenden Druckaufbau in der Ziehschaltung (12) zur Steuerung des Sperrventils (13) der Schiebekammer durch das Öffnen des Sperrventils (13) ermöglicht, so dass die Ziehkammer (30) entladen und eine ausreichende Druckdifferenz in der Ansteuerschaltung zum Verschließen des Auslassventils (15) der Ziehschaltung geschaffen wird, damit der Pumpstrom voll auf die Ziehkammer (31) einwirken kann.

11. Die Steuervorrichtung nach Patentanspruch 1, **dadurch gekennzeichnet, dass** die Schiebeleitung der hydraulischen Ansteuerschaltung eine Drossel aufweist.

12. Die Steuervorrichtung nach Patentanspruch 1, **dadurch gekennzeichnet, dass** die Mittel zum Kontrollieren der Stellung des internen Elements (35) ein Auslassventil der Ziehschaltung beinhalten, das in zwei Teile (39a, 39b) unterteilt und einer verstellbaren Drossel (392) zugeordnet ist, wobei der erste Teil aus einem Rückschlagventil (39b) zum Isolieren der Schiebeschaltung und der Ziehschaltung der hydraulischen Ansteuerschaltung und der zweite Teil aus einem Drosselventil (39a) besteht, das einer Feder (391) zugeordnet ist, um die Ziehschaltung (12) zu entladen, wenn einer Steuerung des Sperrventils (13) der Schiebekammer vorgebeugt werden soll.

13. Die Steuervorrichtung nach Patentanspruch 12, **dadurch gekennzeichnet, dass** die Belastung der Feder (391) und der verstellbaren Drossel (392) so geregelt sind, dass während des manuellen Pumpens eine ausreichende Druckdifferenz entsteht, um das Drosselventil (39a) zu verschließen und einen verbleibenden Teil des gepumpten Öls in die Schiebekammer (30) zu schicken.

14. Die Steuervorrichtung nach Patentanspruch 12, **dadurch gekennzeichnet, dass** das Drosselventil (39a) durch eine Kugel oder eine Platte in einer Leitung mit zwei entgegen gesetzten Dichtsitzen realisiert werden kann.

15. Die Steuervorrichtung nach Patentanspruch 1, **dadurch gekennzeichnet, dass** sie ein Wechselventil (36) beinhaltet, das die Schiebekammer (30) und die Ziehkammer (31) miteinander in Verbindung setzt, wenn die Schiebeschaltung unter Druck gesetzt wird, so dass die Vorrichtung nach dem Rückspeisungsprinzip arbeiten kann.

16. Die Steuervorrichtung nach Patentanspruch 15, **dadurch gekennzeichnet, dass** sie ein Leerlaufventil (51) beinhaltet, das mit einer Leerlaufleitung (52) verbunden ist, um die Schiebekammer (30) und die Ziehkammer (31) miteinander in Verbindung zu setzen, wenn der Kolben den Bereich des freien Falls verlassen hat, so dass die Vorrichtung nach dem Rückspeisungsprinzip arbeiten kann.

17. Die Steuervorrichtung nach Patentanspruch 15, **dadurch gekennzeichnet, dass** sie einen Durchgang (54) im Inneren des internen Elements (35) beinhaltet, der mit einer Drossel (55) ausgestattet ist und eine Kammer (32b) mit einer weiteren Kammer (32a) verbindet, die jeweils als Ziehkammer und Schiebekammer für das interne Element (35) dienen.

18. Die Steuervorrichtung nach Patentanspruch 17, **dadurch gekennzeichnet, dass** die Kammer (32a) von der Schiebekammer (30) durch Verschluss eines Bodens (56) des externen Elements isoliert werden kann und mit der Ziehkammer (31) über ein Loch (53) in Verbindung steht.

19. Die Steuervorrichtung nach den vorstehenden Patentansprüchen, **dadurch gekennzeichnet, dass** das Sperrventil (13) der Schiebekammer (30) und das Sperrventil (14) der Ziehkammer (31) baulich in ein einzelnes Ventil (40) integriert sind.

## Revendications

1. Dispositif de commande du basculement d'une cabine de conducteur dans un camion, comprenant un vérin hydraulique (33) fixé par charnière à la cabine et à un châssis du camion et destiné à activer le basculement de la cabine depuis une position de conduite vers une position basculée et vice versa, le dispositif comprenant également un circuit d'activation hydraulique du vérin, ayant une branche de poussée et une branche de traction, le circuit hydraulique comprenant un dispositif pour commander un mouvement de poussée ou un mouvement de traction du vérin télescopique et étant doté d'au moins une vanne de sectionnement pilotée (13) associée à une chambre de poussée (30) du vérin, **caractérisé par le fait que** le vérin hydraulique (33) est un vérin télescopique ayant un boîtier qui contient ladite chambre de poussée (30) et qu'il présente au moins deux éléments mobiles (34, 35), un élément externe (34) et un interne (35), ledit élément interne (35) se déplaçant à l'intérieur dudit élément externe (34) et **par le fait qu'**il comprend un dispositif pour contrôler la position desdits deux éléments mobiles (34, 35) appartenant au vérin télescopique (33), ledit dispositif pour contrôler la position dudit élément interne (35) comprenant un dispositif à valve configuré pour agir sur ladite vanne de sectionnement (13) de la chambre de poussée (30) pour fermer la chambre de poussée (30) pour contrebalancer le poids de ladite cabine.

2. Le dispositif de commande selon la revendication 1, **caractérisé par le fait que** le dispositif de commande du mouvement de poussée ou de traction du vérin télescopique comprend une pompe mécanique associée à une vanne de distribution (10).

3. Le dispositif de commande selon la revendication 1, **caractérisé par le fait que** le dispositif de commande du mouvement de poussée ou de traction du vérin télescopique comprend une pompe électrique.

4. Le dispositif de commande selon la revendication 1, **caractérisé par le fait que** le dispositif pour contrôler la position dudit élément externe (34) comprend au moins une vanne de sectionnement (14, 38) de la branche de traction, qui est capable d'empêcher l'élément externe (34) du vérin télescopique d'être poussé vers le haut par une pression générée dans la chambre de poussée (30), en raison du poids de la cabine pendant la descente de l'élément interne (35).

5. Le dispositif de commande selon la revendication 2, **caractérisé par le fait que** la vanne de sectionnement (14) de la branche de traction est située sur la branche de traction et reliée au circuit hydraulique par un conduit d'entrée (25) et par un conduit de sortie (26) qui débouche dans la chambre de traction (31) et qui est pilotable à l'aide d'une branche de pilotage (27), ladite branche de pilotage bifurquant de la branche de poussée (11).

6. Le dispositif de commande selon la revendication 1, **caractérisé par le fait que** le dispositif pour contrôler la position dudit élément interne (35) comprend une vanne de décharge (15, 37) de la branche de traction, ladite vanne de décharge (15, 37) est capable d'interrompre la descente de l'élément interne (35) du vérin télescopique par effet du poids de la cabine, en agissant sur le pilotage de la vanne de sectionnement (13) de la chambre de poussée (30) pour fermer la chambre de poussée (30).

7. Le dispositif de commande selon la revendication 4, **caractérisé par le fait que** la vanne de décharge (15) de la branche de traction est reliée au circuit hydraulique par un conduit d'entrée (19) et par un conduit de sortie (20) débouchant dans la branche de poussée (12) et pilotable à l'aide d'une branche de pilotage (21) située en bifurcation du conduit de sortie de la première vanne (13).

8. Le dispositif de commande selon la revendication 5, **caractérisé par le fait que** le conduit d'entrée de la vanne de décharge (15) de la branche de traction présente un clapet de non-retour (18) qui conserve la branche de poussée et la branche de traction séparées afin d'empêcher la pression d'atteindre la vanne de décharge (15) de la branche de traction durant l'activation de la pompe (1) pour soulever la cabine.

9. Le dispositif de commande selon la revendication 5, **caractérisé par le fait que** le conduit d'entrée de la vanne de sectionnement (13) de la chambre de poussée (30) présente un volet de départ (16) qui maintient une valeur de pression dans la chambre de poussée suffisant à permettre le pilotage de la vanne (15) et la décharge de la branche de poussée lorsque le pompage est interrompu.

10. Le dispositif de commande selon la revendication 5, **caractérisé par le fait que** le conduit d'entrée de la vanne de décharge (15) de la branche de traction présente un volet de départ (17) qui permet la formation dans la branche de traction (12) d'une pression suffisante pour piloter la vanne de sectionnement (13) de la chambre de poussée, ouvrant la vanne de sectionnement (13) de sorte à placer la chambre de traction (30) en décharge et créant une différence de pression dans le circuit qui est suffisante pour fermer la vanne de décharge (15) de la branche de traction afin de permettre au flux de pompage d'agir complètement sur la chambre de traction (31).

11. Le dispositif de commande selon la revendication 1, **caractérisé par le fait que** le conduit de poussée du circuit hydraulique présente un volet de départ.

12. Le dispositif de commande selon la revendication 1, **caractérisé par le fait que** le dispositif pour contrôler la position dudit élément interne (35) comprend une vanne de décharge de la branche de traction, divisée en deux parties (39a, 39b) et associée à un volet de départ à flux variable (392), la première partie étant constituée d'un clapet de non-retour (39b) pour isoler la branche de poussée et la branche de traction du circuit hydraulique, et la deuxième partie étant constituée par une vanne de sectionnement du flux (39a) associée à un ressort (391) pour décharger la branche de traction (12) lorsque cela est nécessaire pour empêcher le pilotage de la vanne de sectionnement (13) de la chambre de poussée.

13. Le dispositif de commande selon la revendication 12, **caractérisé par le fait que** la charge du ressort (391) et du volet de départ variable (392) sont régulés de sorte que pendant le pompage manuel une différence de pression suffisante est créée pour permettre à la vanne de sectionnement du flux (39a) d'être fermée afin qu'une partie restante de l'huile pompée soit envoyée dans la chambre de poussée (30).

14. Le dispositif de commande selon la revendication 12, **caractérisé par le fait que** la vanne de sectionnement du flux (39a) peut être réalisée par une bille ou une plaque située dans un conduit ayant deux sièges d'étanchéité opposés.

15. Le dispositif de commande selon la revendication 1, **caractérisé par le fait qu'**il comprend un sélecteur de circuit (36) pour placer la chambre de poussée (30) et la chambre de traction (31) en communication lorsque la branche de poussée est pressurisée, afin de permettre au dispositif de fonctionner en mode de régénération.

16. Le dispositif de commande selon la revendication 15, **caractérisé par le fait qu'**il inclut une vanne de rattrapage (51) reliée à un conduit de rattrapage (52) pour placer la chambre de poussée (30) et la chambre de traction (31) en communication lorsque le piston est sorti d'une zone de chute libre, afin de permettre au dispositif de fonctionner en mode de régénération.

17. Le dispositif de commande selon la revendication 15, **caractérisé par le fait qu'**il inclut un passage (54) à l'intérieur de l'élément interne (35), ledit passage (54) étant doté d'un volet de départ (55) qui relie une chambre (32b) avec une autre chambre (32a) fonctionnant respectivement comme une chambre de traction et une chambre de poussée pour l'élément interne (35).

18. Le dispositif de commande selon la revendication 17, **caractérisé par le fait que** la chambre (32a) est isolée de la chambre de poussée (30) par la fermeture du fond (56) de l'élément externe et est placée en communication avec la chambre de traction (31) à l'aide d'un trou (53).

19. Le dispositif de commande selon les revendications précédentes, **caractérisé par le fait que** la vanne de sectionnement (13) de la chambre de poussée (30) et la vanne de sectionnement (14) de la chambre de traction (31) sont intégrées par construction dans une seule vanne (40).
